(19) Europäisches Patentamt
European Patent Office
Office européen des brevets

(11) Publication number: **0 130 652**
**B1**

(12) # EUROPEAN PATENT SPECIFICATION

(45) Date of publication of patent specification: **16.03.88**

(51) Int. Cl.$^4$: **G 11 B 5/235,** G 11 B 5/187 // G11B5/133, G11B5/193

(21) Application number: **84200944.1**

(22) Date of filing: **29.06.84**

(54) **Magnetic head and method of manufacturing same.**

(30) Priority: **04.07.83 NL 8302364**
**02.05.84 NL 8401383**

(43) Date of publication of application:
**09.01.85 Bulletin 85/02**

(45) Publication of the grant of the patent:
**16.03.88 Bulletin 88/11**

(84) Designated Contracting States:
**AT DE FR GB IT NL**

(56) References cited:
**EP-A-0 062 366**
**AT-B- 332 508**
**AT-B- 340 158**
**AU-B- 416 635**
**DE-A-2 814 744**
**DE-B-1 184 979**
**DE-C- 961 662**
**FR-A-1 506 202**

**The file contains technical information submitted after the application was filed and not included in this specification**

(73) Proprietor: **N.V. Philips' Gloeilampenfabrieken**
**Groenewoudseweg 1**
**NL-5621 BA Eindhoven (NL)**

(72) Inventor: **Peeters, Winfried Lodewijk**
**c/o INT. OCTROOIBUREAU B.V. Prof. Holstlaan 6**
**NL-5656 AA Eindhoven (NL)**
Inventor: **Ponjeé, Johannes Jacobus**
**c/o INT. OCTROOIBUREAU B.V. Prof. Holstlaan 6**
**NL-5656 AA Eindhoven (NL)**

(74) Representative: **Koppen, Jan et al**
**INTERNATIONAAL OCTROOIBUREAU B.V. Prof. Holstlaan 6**
**NL-5656 AA Eindhoven (NL)**

**EP 0 130 652 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

GB-A- 917 824
US-A-3 188 400
US-A-3 229 355
US-A-3 494 026
US-A-3 701 858
US-A-4 172 318
US-A-4 247 354

PATENTS ABSTRACTS OF JAPAN, vol. 2, no. 58, 26th April 1978, page 1536E78

PATENTS ABSTRACTS OF JAPAN, vol. 7, no. 15(P-169)(1160), 21st January 1983

IBM TECHNICAL DISCLOSURE BULLETIN, vol. 9, no. 3, August 1966, page 249, New York, USA; M. LEVEQUE: "Bonding with adhesive transfer"

ARMY MANUFACTURING NOTES, no. ARLCD-TR-78042, July 1980, Alexandria, Virginia, USA; W.C. TANNER: "Improved metal bonding with silanes"

**Description**

The invention relates to a method of manufacturing a magnetic head comprising a magnetic core provided with pole tips which limit a non-magnetic gap of small length in which a first and a second moulding of ferrite each having a gap-limiting pole tip surface are used.

Such a method is known from US—A—3,656,229 and a magnetic head manufactured by that method can be used for recording, reproducing and/or erasing magnetic information in a track of a magnetic information carrier.

The gap in the magnetic core of a magnetic head is of essential importance for the quality of a magnetic head: the length of the gap should be small to very small dependent upon the envisaged application of the magnetic head, while also the permissible tolerance of the gap length is very small. In magnetic heads for video-recording, in which information carriers of the longitudinal magnetization type are used, a gap length of approximately 0.25 µm is aimed at; in the case of an information carrier of the perpendicular magnetization type, a gap length of approximately 0.1 µm is aimed at. Furthermore, the material with which the gap is filled and the adhesion of this material to the gap-limiting surfaces of the pole tips are important for the durability of the magnetic head.

The term "gap length" is to be understood to mean herein the dimension of the gap which corresponds to the distance between the gap limiting surfaces of the pole tips.

According to the aforesaid US—A—3 656 229, magnetic heads are obtained by providing on a magnetic core part a layer of a non-magnetic metal oxide or metal oxide mixture as a material filling the gap and determining the length of the gap. The core part is heated for this purpose to a comparatively high temperature (400—800°C) in contact with the vapour of one or more organometallic compounds. A second core part, which may be provided with such a metal oxide layer, is adhered to the first part by means of an adhesive. Examples of adhesives are glass and synthetic resins, but the patent gives preference to glass because synthetic resins would swell to an undesired extent. In order to unite the core parts, they are arranged opposite each other and molten glass is caused to flow into the slit between these core parts. The magnetic heads obtained have a gap length of 0.8—1.2 µm.

For many applications, this gap length is too large. Other disadvantages of these known magnetic heads are that the metal oxide layer is deposited from the gaseous phase at a high temperature. In the manufacture of magnetic heads, this step is time-consuming and expensive, while the step of filling the slit between two core parts with molten glass is difficult to control. It is moreover desirable to provide both core parts with a metal oxide layer in order to prevent interaction between the glass and a core part not coated with metal oxide. In this magnetic head, the gap consequently has a filling composed of two or three layers. The accuracy with which the gap length is adjusted therefore depends in this known magnetic head upon the accuracy with which the desired thickness of each of the two or, in the preferred case, three layers is obtained.

One object of the invention is to provide a method of manufacturing a magnetic head which can be readily carried out and by which a magnetic head having a gap of small length and great strength is obtained.

Said object is achieved in a method of manufacturing a magnetic head mentioned in the openings paragraph, characterized in that the gap-limiting pole tip surfaces of the first and second mouldings are cleaned by means of a plasma discharge in an oxygen atmosphere or with ultraviolet radiation in an ozone atmosphere, an adhesion promotor and a solution of a synthetic resin chosen from the group comprising epoxy resins, acrylic ester resins and polyester resins are applied to the cleaned gap-limiting pole tip surface of the first moulding and the first moulding is spun about an axis at right angles to its gap-limiting pole tip surface, the solvent evaporating, the second moulding is arranged with its gap-limiting pole tip surface opposed to the gap-limiting pole tip surface of the first moulding, and then the synthetic resin is cured while the second moulding is pressed against the synthetic resin and the gap-limiting pole tip surface is in contact with the adhesion promotor, locating the gap-limiting pole tip surfaces at a distance of at most 0.5 µm from each other, and the two mouldings are adhered together at an elevated temperature. The term "adhesion promotor" is to be understood herein to means a bifunctional compound which can be chemically bonded on the one hand to the material of the pole tip and on the other hand to the synthetic resin. As soon as the adhesion promotor has reacted with the synthetic resin, the reaction product can be considered as a synthetic resin with substituents which have been chemically bounded or can be chemically bonded to the pole tip material. As an adhesion promotor, with an epoxy resin, for example, a trialkoxy-alkylsilane may be used in which the alkyl group has a substituent reactive with the epoxy resin, such as an amino or an epoxy group. The alkoxy groups can form oxygen brides with the magnetic material. By using 3-glycidoxypropolytrimethoxy silane

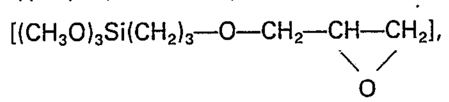

the tensile strength of an otherwise unchanged magnetic head with a gap filling of epoxy resin was increased from 136 to more than 256 kg/cm$^2$. With the same adhesion promotor, when using a polyester resin, a tensile strength of 240 kg/cm$^2$ was measured.

It is to be noted that the use of an adhesion promotor is known per se from US—A—4.247.354, in which it is described that the bonding between thermoplastic or thermosetting resins and specific inorganic oxide substrates can be improved by means of hydrolytically reactful organosilane.

The method according to the invention has the great advantages of accuracy, simplicity and rapidity. The method is excellently reproducible when the same concentration of the resin in the solvent, the same speed of revolution of the moulding to be coated and the same pressure during curing are maintained. The steps of applying the resin and of curing it are effected rapidly, while a temperature of up to approximately 250°C is sufficient for curing. Due to this low temperature, no or substantially no stresses are produced in the magnetic material during the manufacture of the magnetic head.

By spinning of the moulding the solution is spread over the pole face. As could be expected, differences in layer thickness in the coating of synthetic resin, such as an embossed part along the edge of the first gap-limiting pole tip surface, can occur. However, it is a surprise to find that such differences do not influence the quality of the magnetic head. When the second moulding is urged towards the first moulding, a plastic deformation of the layer of synthetic resin occurs, as a result of which differences in layer thickness are eliminated and the desired length of the gap to be formed is adjusted.

As compared to many other methods of manufacturing magnetic heads, the method according to the invention has the advantage that only one gap-filling material need be applied. It is to be noted that from DE—B—1184979 a method is known per se so as to put a casting resin as non-magnetisable material into the gap of a magnetic head. According to this known method the pole faces of the core limbs are brushed with a casting resin which can be cured and compressed to such an extent that a gaplength of approximately 1 µm is realised after curing of the casting resin.

In a modification of the method according to the invention, an adhesion promotor and a solution of the synthetic resin are also applied to the gap-limiting pole tip surface of the second moulding and the second moulding is spun about an axis at right angles to its gap-limiting pole tip surface. Due to the simplicity of the method and due to the fact that the process conditions can be readily maintained, the modifications of the method, in which both gap-limiting pole tip surfaces are coated with synthetic resin, is not disadvantageous and with this modification magnetic heads can be manufactured in a reproducible manner.

it is also possible in a simple manner to apply a film of an adhesion promotor to the gap-limiting pole tip surfaces. For this purpose, the mouldings may be immersed with these surfaces in a solution of the adhesion promotor. However, according to a very favourable and simple embodiment, these surfaces may be exposed to the vapour of the adhesion promotor, for example in an evacuated container. In view of the function of the adhesion promotor, a monomolecular skin is sufficient.

If an adhesion promotor skin is used, this does not imply a complication for obtaining the desired gap length. On the one hand, the skin is allowed to be a monomolecular layer so that this skin is extremely thin, while on the other hand the gap length is determined by the thickness of the layer of synthetic resin and the pressure exerted during the curing step.

In a favourable embodiment the synthetic resin is an acrylic ester resin. The acrylic ester resin can be promoted with, for example, methacryloxy propyltrimethoxysilane.

The product of the method may be machined, if desired, for example, to obtain therefrom a number of magnetic heads by sawing. It is also possible to the reduce the width of the gap (*i.e.* the dimension of the gap along the pole face of the magnetic head and parallel to the gap-limiting pole tip surfaces) by removing pole tip material and hence synthetic resin adhered thereto. Further, a coil chamber (a space to be traversed by wire turns) may be formed or enlarged, for example, by means of a laser. The synthetic resin present in the gap in fact does not interfere with these machining operations.

Another object of the invention is to provide a magnetic head of which the gap length is very small and which magnetic head can be readily manufactured and has a great mechanical strength.

This object is achieved in a magnetic head obtainably with the aforementioned method according to the invention, comprising a magnetic core provided with pole tips of ferrite which limit a gap having a small length and being filled with non-magnetizable material which adheres the pole tips to each other, characterized in that the material filling the gap and adhering the pole tips to each other is a synthetic resin chosen from the group comprising epoxy resins, acrylic ester resins and polyester resins, an adhesion promotor is used at the interfaces between the pole tips and the synthetic resin, and the gap length is at most 0.5 µm.

Experiments have shown that the magnetic head according to the invention has a high durability: that it is resistant to changing climatic conditions, has a great mechanical strength (large to very large forces are required to eliminate the adherence between the pole tips) and has a high resistance to wear. Thus, it has been found that, after the pole face of the magnetic head had been treated with an abrasive belt, the pole tips at the pole face and the material in the gap were uniformly worn off. No material had been broken from the gap-limiting surfaces of the pole tips, which usually consist of Mn—Zn-ferrite.

In achieving the invention, the prejudice was overcome which becomes manifest in the aforementioned US—A—3656229 synthetic resins would be less suitable for use in magnetic heads because the swell to an undesired extent. Further, according to said US—A—3656229, synthetic resins are used exclusively as an adhesive. Synthetic resins would have to be even more unsuitable to be used not

only as an adhesive, but additionally as the gap filling material—that is to say as a material determining the gap length—in magnetic heads.

This prejudice had become manifest already much earlier in DE—B—1,171,467. In said document it is said that with the use of ethoxyline resins and polyester resins as a gap-filling material, mechanical means have to be employed to keep the magnet core parts pressed together. It is further noted in said document that the synthetic resin is ground away rapidly, as a result of which the gap edges are not kept supported and consequently start to crumble off. Finally, it is noted that gaps of a small length (in said document a length of a few μm) can be realized only with difficulty and that the gap length cannot be readily adjusted with great accuracy.

It is not surprising that there is not reverted to synthetic resins as a gap-filling material for obtaining gaps having a progressively smaller length (down to below 0.5 μm) in view of the fact that when using synthetic resins as the gap-filling material, gaps having a length of a few μm were described to be achievable only with great difficulty and with little accuracy. On the contrary, use has increasingly been made of thin foils as a spacer which were secured with the aid of vitreous material. As the required gap length became smaller and the spacer foils became so thin that they could no longer be manipulated, the choice was increasingly made to apply the gap-filling material by evaporation or by sputtering. Gaps are then mostly obtained which are filled with material composed of several layers. Due to their time-consuming manufacture, such magnetic heads are expensive.

In view of the negative judgement made on synthetic resins as a material to fill the gap and to adhere the pole tips firmly together and also in view of the complicated gap fillings and the complicated manufacturing techniques used recently, it is very remarkable that it has proved possible with the aforesaid synthetic resins to obtain a magnetic head of high quality which can moreover, be manufactured in a very simple manner. In contrast with the gap filling of the conventional magnetic heads, the gap filling of the magnetic head according to the invention comprises a simple or substantially simple layer. Besides by the said properties, such as resistance to climatic influences, mechanical strength and resistance to the action of grinding tape, the quality of the magnetic head is further illustrated by the fact that the magnetic core can be subjected to the operation of a laser, for example in order to form a space for the magnetic coil or in order to reduce the width of the gap at the running surface without the gap, its filling and the adhesion of the filling to the pole tips being noticeably adversely affected.

Very favourable results were obtained with the use of an acrylic ester resin as a gap-filling material adhering the pole tips together.

Other gaps of the magnetic head, such as a rear gap, may be filled with a similar promoted synthetic resin.

Embodiments of the magnetic head and the method are shown and described in the drawing and in the examples, respectively. In the drawing:

Fig. 1 is a diagrammatic perspective representation of a magnetic head;

Fig. 2 is a diagrammatic perspective representation of an assembly of two mouldings of magnetizable material adhered together by a layer of synthetic resin;

Fig. 3 is a diagrammatic representation of the steps of the method.

The magnetic head shown in Fig. 1 has a magnetic core comprising two parts 1, 2 each provided with a pole tip 3 and 4, respectively. The pole tips 3, 4 limit a gap 5 having a gap length of at most 0.5 μm. The relative direction of movement of a magnetic information carrier, which co-operates with the magnetic head, is indicated by the arrow V. The term "gap length" is to be understood to mean the dimension of the gap 5 in the direction of the arrow V.

The gap 5 is filled with synthetic resin as a non-magnetizable material. The synthetic resin adheres the pole tips 3, 4 to each other. The opposed surfaces of the pole tips 3, 4 to which the synthetic resin adheres are designated in this specification "gap-limiting surfaces".

In the magnetic core part 1 is recessed a coil chamber 8 which is traversed by wire turns 9. A pole face 10 is the surface of the magnetic head along which the information carrier is passed during recording, reproducing or erasing of magnetic information.

In the assembly shown in Fig. 2, corresponding parts are each designated by a reference numeral which is 10 higher than the numerals used in Fig. 1. Dotted lines indicate that magnetic heads can be obtained from this assembly, for example, by sawing.

Fig. 3a shows a first moulding 11 of magnetizable material corresponding to that shown in Fig. 2. The moulding has a part 13 from which a pole tip is formed later. Reference numeral 16 denotes a first gap-limiting pole tip surface.

The moulding of Fig. 3b is formed from the moulding of Fig. 3a by applying an adhesion promotor skin 21 to the first gap-limiting pole tip surface 16 (Fig. 3a). (In order to visualize this skin, it is shown here and elsewhere, as layers of synthetic resin are, in a disproportionately large thickness). The skin 21 is obtained by contacting the surface 16 with the vapour of the adhesion promotor.

Fig. 3e shows a second moulding 12 of magnetizable material as shown in Fig. 2. A second pole tip is formed from the part denoted by 14, while reference numeral 17 designates the second gap-limiting pole tip surface (*i.e.* the gap-limiting surface of this second pole tip).

As in Fig. 3b, reference numeral 21 denotes in Fig. 3f a promotor skin.

In Fig. 3c, a layer 22 of synthetic resin as a non-magnetizable material is applied to the moulding of Fig.

3b by applying a solution of a synthetic resin to the first gap-limiting pole tip surface 16 provided with a promotor skin 21 and by rotating the moulding about an axis at right angles to this surface 16, during which process the solvent is thrust away and evaporates.

The product shown in Fig. 3c and that shown in Fig. 3f are united in Fig. 3g with the first gap-limiting pole tip surface 16 and the second gap-limiting pole tip surface 17 facing each other and with the interposed synthetic resin layer 22 interposed between the surfaces 16 and 17. While the second moulding 12 is pressed against the layer 22 of synthetic resin so that the second gap-limiting pole piece surface 17 is located at a distance of at most 0.5 µm from the first gap-limiting pole piece surface 16, the synthetic resin is cured and adheres to the said gap-limiting surfaces 16 and 17, thus forming the gap 15'.

In Fig. 3d, the first moulding 11 is provided with a layer 22 of a synthetic resin applied in the manner described with reference to Fig. 3c and is provided with an adhesion promotor dispersed in the layer 22 of synthetic resin obtained by dissolving an adhesion promotor in the solution of synthetic resin.

The moulding of Fig. 3d is united with the moulding of Fig. 3e (see Fig. 3h) in manner described with reference to Fig. 3g. At an elevated temperature and under pressure (P), the layer 22 of synthetic resin was cured with a maximum layer thickness of 0.5 µm, thus forming the gap 15.

Fig. 3j shows a modification of the method, obtained by combining two products according to Fig. 3d. Similarly in Fig. 3k two products according to Fig. 3c are combined. In the products of Fig. 3j and Fig. 3k, respectively, for example by means of a laser a coil chamber may be provided.

Examples

1) Mouldings of ferrite as magnetizable material are cleaned by means of a plasma discharge in oxygen or with ozone, for example generated *in situ* in air by means of an ultraviolet radiation source. The mouldings were contacted at 0.01 bar with the vapour of 3-glycidoxypropyltrimethoxysilane as adhesion promotor.

A 3% by weight solution of the diglycidyl ether of disphenol A in methyl ethyl ketone and, as a curing agent, dicyanodiamide was applied to a first moulding. The moulding, whose coated surface had dimensions of 0.8×1.6 cm, was spun at 1500 revolutions/min. The second moulding was positioned with respect to the first moulding and urged with 27 bar. The epoxy resin was cured under pressure at 200°C. The length of the gap obtained was 0.2 µm.

A 15% by weight solution of the same material in monoethylglycol was applied to a similar moulding. The moulding was spun at 3500 revolutions/min. After positioning a second moulding, a gap of 0.1 µm was obtained under the same conditions.

2) In a comparison test, mouldings of ferrite (0.3×0.8×1.6 cm) were pairwise coated with synthetic resin. The coated surfaces (0.8×1.6 cm) of each pair of mouldings were urged against each other under pressure. The synthetic resin was cured. At the long side faces a groove was provided on the seam of synthetic material, in which groove the claws of an apparatus for measuring the tearing resistance can be positioned. The tearing resistance of the seam was determined according to the method of S. M. Wiederhorn and L. H. Bolz, J. Am. Ceram. Soc., 53 (1970) 543.

a) Ferrite mouldings were coated pairwise with a solution of 50 parts by weight of the acrylic acid ester of the bis-hydroxyethyl ether of bisphenol A in 1,1,1-trichloroethane, to which were added 1 part by weight of methacryloxypropyltrimethoxysilane as adhesion promotor and 0.5 part by weight of dimethoxyphenylbenzoylmethane as initiator. The mouldings were spun at 3500 revolutions/min. The coated surfaces were urged against each other with a pressure of 10 bar and the synthetic material was cured by heating at 150°C for 30 minutes. The seam of synthetic material (corresponding to the gap of a magnetic head) had a width (length) of 0.15 µm.

b) Similarly, ferrite mouldings were coated with a solution of 6 parts by weight of unsaturated polyester, 2 parts by weight of peroxide and as adhesion promotor 1 part by weight of 3-glycidoxypropyltrimethoxysilane in 100 parts by weight of 1,1,1-trichloroethane. The mouldings were spun at 4500 revolutions/min. The coated surfaces were urged against each other with a pressure of 15 bar and the synthetic material was cured by heating for 2 hours at 100°C. The thickness of the polyester layer between the moulding was 0.2 µm.

c) Similar mouldings were coated with a solution of 1 part by weight of 3-glycidoxypropyltrimethoxysilane and 15 parts by weight of bisphenol A-diglycidyl ether containing as curing agent dicyanodiamide in 100 parts by weight of ethylglycolacetate. The mouldings were spun at 3500 revolutions/min and urged against each other with their coated surfaces under a pressure of 40 bar. The synthetic material was cured by heating for 30 minutes at 200°C. The thickness of the epoxy layer was 0.2 µm.

The products obtained were tested with respect to their tearing resistance partly immediately and partly after having been subjected to a cyclic moisture test. In this test, the products are kept for 1.5 hours at 25°C, are heated in 2 hours to 65°C, are kept for 2 hours at 65°C and are cooled in 2 hours to 25°C. The relative humidity is kept at 93% during this cycle. The test is continued for 10 days according to this schedule. For many applications of magnetic heads, this test is more severe than practical conditions.

The results of the measurements are indicated in the following table.

TABLE

| Example | Tearing resistance ($MPa \cdot m^{1/2}$) | |
|---|---|---|
| | Before moisture test | After moisture test |
| 2a | 0.9—1.1 | 0.9—1.1 |
| 2b | 0.67 | 0.4 |
| 2c | 0.9 | 0.3 |
| solid ferrite | 0.8—1.0 | 0.8—1.0 |

For comparison, in the table the tearing strength of a solid ferrite moulding is indicated.

It appears from the table that the products which are obtained with the use of acrylic ester resin are not adversely affected by the moisture test and have at the seam at least the same tearing resistance as ferrite itself.

It further appears that with epoxy resin and with polyester resin very short gaps with a high resistance to tearing can be obtained. As a standard for practical usability a tearing strength of 0.6 $MPa \cdot m^{1/2}$ is employed.

It also appears that the conditions of the moisture test have been too heavy in view of the standard for the products of, for example, 2b) and 2) and that magnetic heads obtained in the manner described for these examples must not be subjected to these extreme conditions. It is finally apparent from Example 2b) that the polyester resin has a higher resistance to these extreme conditions than the epoxy resin.

**Claims**

1. A method of manufacturing a magnetic head comprising a magnetic core provided with pole tips (3, 4) which limit a non-magnetic gap (5) of small length in which a first and a second moulding (11, 12) of ferrite each having a gap-limiting pole tip surface (16, 17) are used, characterized in that

— the gap-limiting pole tip surfaces of the first and second mouldings are cleaned by means of a plasma discharge in an oxygen atmosphere or with ultraviolet radiation in an ozone atmosphere,
— an adhesion promotor and a solution of a synthetic resin chosen from the group comprising epoxy resins, acrylic ester resins and polyester resins are applied to the cleaned gap-limiting pole tip surface of the first moulding and
— the first moulding is spun about an axis at right angles to its gap-limiting pole tip surface, the solvent evaporating,
— the second moulding is arranged with its gap-limiting pole tip surface opposed to the gap-limiting pole tip surface of the first moulding, and then
— the synthetic resin is cured while the second moulding is pressed against the synthetic resin and the gap-limiting pole tip surface is in contact with the adhesion promotor, locating the gap-limiting pole tip surfaces at a distance of at most 0.5 μm from each other, and the two mouldings are adhered together at an elevated temperature.

2. A method as claimed in Claim 1, characterized in that

— an adhesion promotor and a solution of the synthetic resin are also applied to the gap-limiting pole tip surface of the second moulding and
— the second moulding is spun about an axis at right angles to its gap-limiting pole tip surface.

3. A method as claimed in Claim 1 or 2, characterized in that a solution of synthetic resin containing the adhesion promotor is used.

4. A method as claimed in Claim 1 or 2, characterized in that the gap-limiting pole tip surfaces of the first and second moulding are provided with an adhesion promotor skin before they are contacted with the solution of the synthetic resin.

5. A method as claimed in Claim 4, characterized in that the adhesion promotor skin is applied by exposing the gap-limiting pole tip surfaces to the vapour of the adhesion promotor.

6. A method as claimed in any one of the Claims 1 to 5, characterized in that the synthetic resin is an acrylic ester resin.

7. A magnetic head obtainable by the method as claimed in any one of the Claims 1 to 6, comprising a

magnetic core provided with pole tips (3, 4) of ferrite which limit a gap (5) having a small length and being filled with non-magnetizable material which adheres the pole tips to each other, characterized in that

— the material filling the gap and adhering the pole tips to each other is a synthetic resin chosen from the group comprising epoxy resins, acrylic ester resin and polyester resins,
— an adhesion promotor is used at the interfaces between the pole tips and the synthetic resin, and
— the gap length is at most 0.5 µm.

8. A magnetic head as claimed in Claim 7, characterized in that the adhesion promotor is also dispersed in the synthetic resin.

9. A magnetic head as claimed in Claim 7 or 8, characterized in that the synthetic resin is an acrylic ester resin.

**Patentansprüche**

1. Verfahren zum Herstellen eines Magnetkopfes mit einem Magnetkern mit Polschuhen (3, 4), die einen nicht magnetischen Spalt (5) einer geringen Länge begrenzen, in dem ein erster und ein zweiter Ferritformteil (11, 12) mit je einer spaltbegrenzenden Polschuhfläche (16, 17) verwendet werden, dadurch gekennzeichnet,

— daß die spaltbegrenzenden Polschuhflächen des ersten und zweiten Formteils durch Flasmaentladung in einer Sauerstoffatmosphäre oder mit UV-Strahlung in einer Ozonatmosphäre gereinigt werden,
— ein Adhäsionsfördermittel und eine Lösung eines Kunstharzes aus der Gruppe mit Epoxyharzen, Akrylesterharzen und Polyesterharzen auf der gereinigten spaltbegrenzenden Polschuhfläche des ersten Formteils angebracht werden und
— der erste Formteil um eine Achse gedreht wird, die senkrecht auf der spaltbegrenzenden Polschuhfläche steht, wobei beim Verdampfen des Lösungsmittels
— der zweite Formteil mit der spaltbegrenzenden Polschuhfläche gegenüber der spaltbegrenzenden Polschuhfläche des ersten Formteils angeordnet wird,
— wonach der Kunstharz ausgehärtet wird, während der zweite Formteil gegen den Kunstharz gedrückt wird und die spaltbegrenzende Polschuhfläche mit dem Adhäsionsfördermittel Kontaktiert wird, wobei die spaltbegrenzenden Polschuhflächen in einem Abstand von maximal 0,5 µm voneinander liegen und die zwei Formteile bei einer erhöhten Temperatur miteinander verbunden werden.

2. Verfahren nach Anspruch 1, dadurch gekennzeichnet, daß

— ebenfalls ein Adhäsionsfördermittel und eine Kunststofflösung auf der spaltbegrenzenden Polschuhfläche des zweiten Formteils angebracht und
— der zweite Formteil um eine Achse senkrecht zu der spaltbegrenzenden Polschuhfläche gedreht wird.

3. Verfahren nach Anspruch 1 oder 2, dadurch gekennzeichnet, daß eine Lösung des Kunstharzes mit dem Adhäsionsfördermittel verwendet wird.

4. Verfahren nach Anspruch 1 oder 2, dadurch gekennzeichnet, daß die spaltbegrenzenden Polschuhflächen des ersten und zweiten Formteils bevor sie mit der Lösung des Kunstharzes kontaktiert werden, mit einer Adhäsionsfördermittelhaut versehen werden.

5. Verfahren nach Anspruch 4, dadurch gekennzeichnet, daß die Adhäsionsfördermittelhaut dadurch angebracht wird, daß die spaltbegrenzenden Polschuhflächen dem Dampf des Adhäsionsfördermittels ausgesetzt werden.

6. Verfahren nach einem der Ansprüche 1 bis 5, dadurch gekennzeichnet, daß der Kunstharz ein Akrylatesterharz ist.

7. Magnetkopf, der nach dem Verfahren nach einem der Ansprüche 1 bis 6 erhalten werden kann, mit einem Magnetkern, der mit Polschuhen (3, 4) aus Ferrit versehen ist, die einen Spalt (5) mit einer geringen Länge hegrezen und wobei dieser Spalt mit nicht magnetisierbarem Material gefüllt ist, das die Polschuhe miteinander verbindet, dadurch gekennzeichnet, daß

— das den Spalt füllende und die Polschuhe miteinander verbindende Material ein Kunstharz ist, der gewählt worden ist aus der Gruppe mit Epoxyharzen, Akrylesterharzen und Polyesterharzen,
— ein Adhäsionsfördermittel verwendet wird und zwar an den Orenzflächen zwischen den Polschuhen und dem Kunstharz und
— die Spaltlänge maximal 0,5 µm beträgt.

8. Magnetkopf nach Anspruch 7, dadurch gekennzeichnet, daß das Adhäsionsfördermittel ebenfalls in dem Kunstharz dispergiert worden ist.

9. Magnetkopf nach Anspruch 7 oder 8, dadurch gekennzeichnet, daß der Kunstharz ein Akrylatesterharz ist.

**Revendications**

1. Procédé pour la fabrication d'une tête magnétique comportant un noyau magnétique muni de pièces polaires (3, 4) qui limitent un entrefer non magnétique (5) de petite longueur, dans lequel sont utilisées une première et une deuxième pièce moulée (11, 12) en ferrite présentant chacune une surface de pièce polaire limitant l'entrefer (16, 17), caractérisé en ce que

— les surfaces de pièce polaire limitant l'entrefer des première et seconde pièces moulées sont nettoyées par une décharge à plasma dans une atmosphère d'oxygène ou à l'aide de rayonnement ultraviolet dans une atmosphère d'ozone un promoteur d'adhérence et une solution de matière synthétique choisie dans le groupe constitué par le résine époxy, les résines d'ester acryliques et les résines de polyester sont appliqués sur la surface de pièces polaires limitant l'entrefer nettoyée de la première pièce moulée et
— la première pièce moulée est tournée autour d'un axe perpendiculaire à sa surface de pièce polaire limitant l'entrefer, le solvant s'évaporant,
— la seconde pièce moulée est disposée de façon que sa surface de pièce polaire limitant l'entrefer se situe vis-à-vis de la surface de pièce polaire limitant l'entrefer de la première pièce molàire et
— la matière synthétique est durcie, alors que la seconde pièce moulée est appliqués contre la matière synthétique et la surface de pièce polaire limitant l'entrefer est en contact avec le promoteur d'adhérencé, les surfaces de pièce polaire limitant l'entrefer sont positionnées à une distance d'au maximum 0,5 µm l'une par rapport à l'autre, et les deux pièces moulées sont adhérées l'une à l'autre, à une température augmentée.

2. Procédé selon la revendication 1, caractérisé en ce que,

— un promoteur d'adhérence et une solution de la matière synthétique sont également appliquée sur la surface de pièce polaire limitant l'entrefer de la seconde pièce moulée et
— la seconde pièce moulée est portée à rotation autour d'un axe perpendiculaire à sa surface de pièce polaire limitant l'entrefer.

3. Procédé selon la revendication 1 ou 2 caractérisé par l'utilisation d'une solution de matière synthétique contenant la promoteur d'adhérence.

4. Procédé selon la revendication 1 ou 2, caractérisé en ce que les surfaces de pièce polaire limitant l'entrefer des première et seconde pièces moulées sont munies d'une pellicule de promoteur d'adhérence avant d'être mises en contact avec la solution de la matière synthétique.

5. Procédé selon la revendication 4, caractérisé en ce que la pellicule de promoteur d'adhérence est appliquée par exposition des surfaces de pièce polaire limitant l'entrefer à la vapeur d'un promoteur d'adhérence.

6. Procédé selon l'une des revendications 1 à 5, caractérisé en ce que la matière synthétique est une résine d'ester acrylique.

7. Tête magnétique pouvant être obtenue à l'aide du procédé selon l'une des revendications 1 à 6, comportant un noyau magnétique muni de pièces polaires (3, 4) en ferrite, qui limitent un entrefer (5) d'une faible longueur, rempli de matériau non magnétisable assurant l'adhérence des pièces polaires, l'une à l'autre, caractérisé en ce que

— le matériau remplissant l'entrefer et assurant l'adhérence de pièce polaires l'une à l'autre est une matière synthétique choisie dans le groupe constitué par les résines époxy, les résines d'ester acrylique et les résines de polyester,
— un promoteur d'adhérence est utilisé aux interfaces entre les pièces polaires et la matière synthétique et,
— la longueur d'entrefer est d'au maximum 0,5 µm.

8. Tête magnétique selon la revendication 7, caractérisée en ce que le promoteur d'adhérence est également réparti dans la matière synthétique.

9. Tête magnétique selon la revendication 7 ou 8, caractérisé en ce que la matière synthétique est une résine d'ester acrylique.

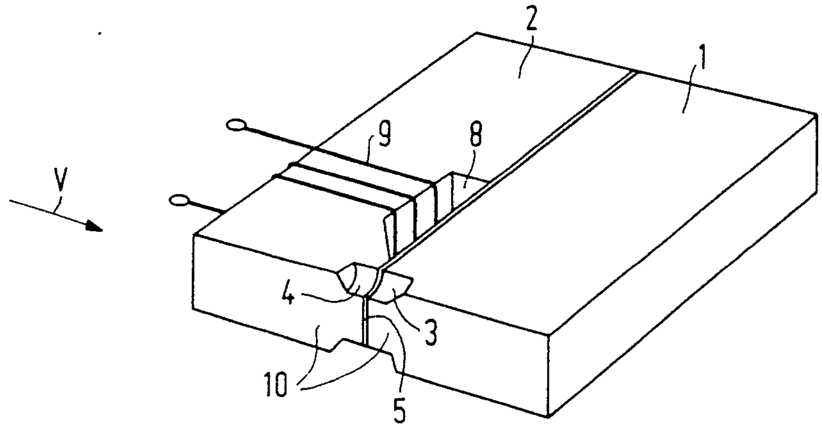


FIG. 1

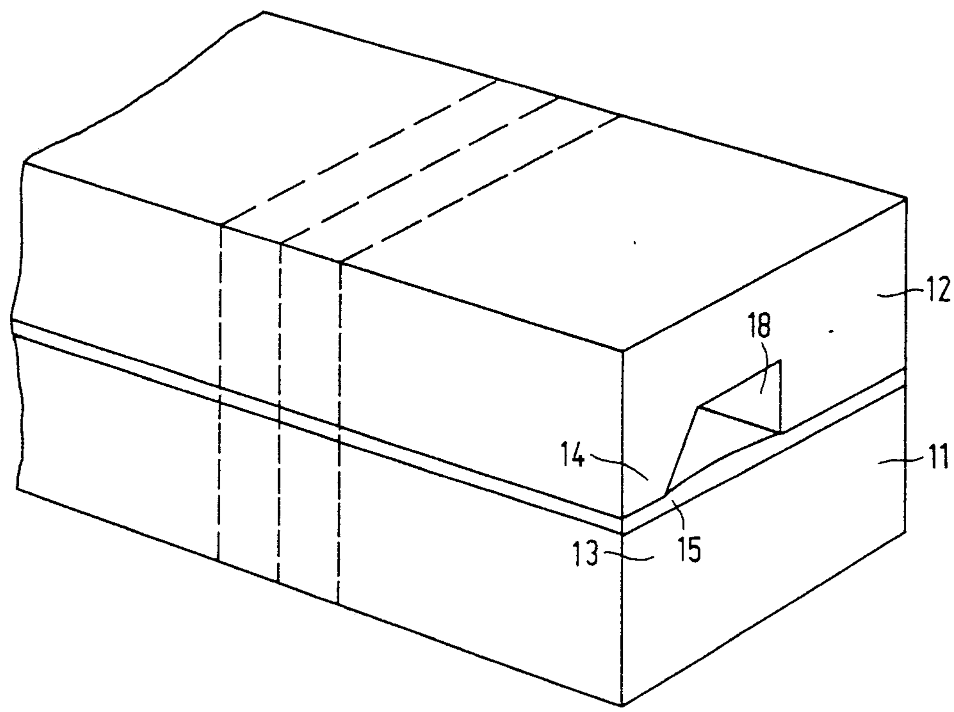


FIG. 2

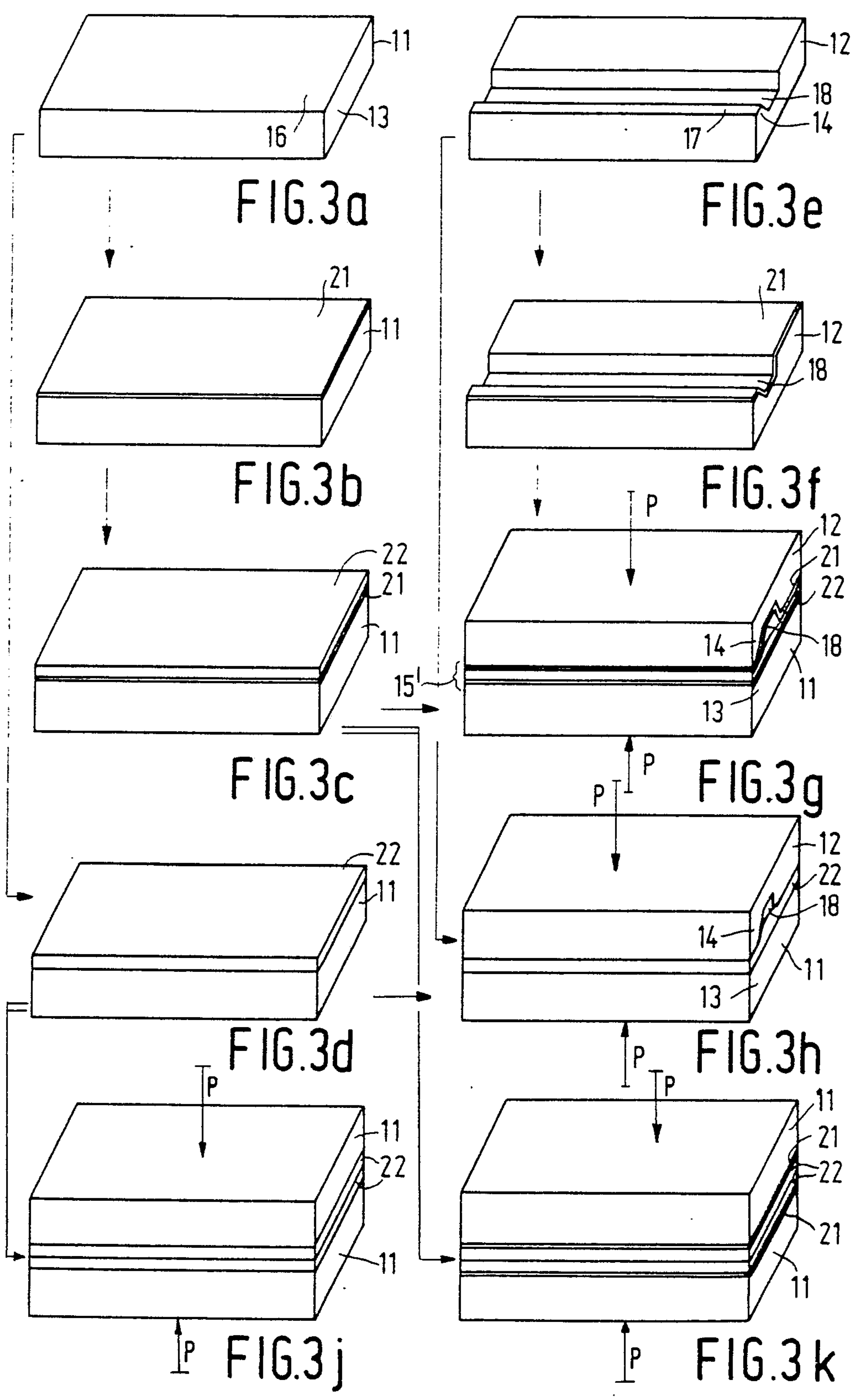
11
13
16
FIG.3a
21
11
FIG.3b
22
21
11
FIG.3c
22
11
FIG.3d
P
11
22
11
P
FIG.3j
12
18
14
17
FIG.3e
21
12
18
FIG.3f
P
12
21
22
14
18
15'
11
13
P
FIG.3g
P
12
22
18
14
11
13
P
FIG.3h
P
11
21
22
21
11
P
FIG.3k